(19) Europäisches Patentamt

European Patent Office

Office européen des brevets

(11) Publication number: **0 302 854 B1**

# (12) EUROPEAN PATENT SPECIFICATION

(45) Date of publication of patent specification:
**12.06.91 Bulletin 91/24**

(21) Application number: **87900822.5**

(22) Date of filing: **21.01.87**

(86) International application number:
**PCT/FI87/00013**

(87) International publication number:
**WO 88/05336 28.07.88 Gazette 88/17**

(51) Int. Cl.⁵: **B01J 8/24, B04C 3/06**

---

## (54) A CIRCULATION FLUIDIZED BED REACTOR.

---

(43) Date of publication of application:
**15.02.89 Bulletin 89/07**

(45) Publication of the grant of the patent:
**12.06.91 Bulletin 91/24**

(84) Designated Contracting States:
**AT BE CH DE FR GB IT LI LU NL SE**

(56) References cited:
**WO-A-86/04402**
**FR-A- 1 325 323**
**US-A- 3 698 874**

(73) Proprietor: **A. AHLSTROM CORPORATION**
**SF-29600 Noormarkku (FI)**

(72) Inventor: **ARPALAHTI, Olli**
**Kosulankatu 17**
**SF-78300 Varkaus (FI)**

(74) Representative: **Lehn, Werner, Dipl.-Ing. et al**
**Hoffmann, Eitle & Partner Patentanwälte**
**Arabellastrasse 4**
**W-8000 München 81 (DE)**

EP 0 302 854 B1

Jouve, 18, rue Saint-Denis, 75001 PARIS

## Description

The present invention relates to a circulating fluidized bed reactor in which solid particles are conveyed by gas through the reactor and separated from the gas by means of a cyclone separator or a similar device and returned to the reactor.

Today circulating fluidized bed reactors are applied more and more in various processes such as chemical processes, combustion and gasifying.

The object of the invention is to provide a circulating fluidized bed reactor in which solid material can effectively be separated from the flue gas and returned to a required location in the reactor.

According to the invention, this is achieved by means of a cyclone separator for separating particulate material from the flue gases from the reactor chamber, the horizontal vortex chamber of which is provided with openings on its periphery, a duct leading gas from the reactor chamber and a return duct leading separated solid material to the reactor chamber being respectively connected to the openings, and from which vortex chamber gas is discharged from one or both ends, wherein the gas inlet opening of the vortex chamber is arranged in the vicinity of one end thereof and has a width smaller than that of the vortex chamber, wherein a first discharge opening for separated solid material is provided near the gas inlet opening and wherein a second discharge opening is provided near the discharge opening for purified gas at a distance from the gas inlet opening in the longitudinal axial direction of the vortex chamber.

FI patent application 841126 discloses a circulating fluidized bed reactor in which solid material is separated by means of a horizontal cyclone disposed on top of the reactor. A return duct for separated material is connected to the periphery of the separation chamber of the horizontal chamber, preferably to the lowest part of the periphery, and the purified gases are discharged from one or both ends of the separation chamber. The separated solids are discharged from the separation chamber via one opening that stretches over its entire width.

In the known application of the horizontal cyclone separator, the discharge opening for solid material and the inlet opening for gas stretching over the entire width of the chamber disturb the flow conditions in the separation chamber.

In the apparatus according to the invention, in which the separator is provided with two discharge openings spaced a distance apart from each other, most of the dust coming into the cyclone is separated due to centrifugal force already during the first cycle and is discharged from the vortex chamber via an opening provided near the inlet opening for the gas. The remaining dust load is relatively small and cannot essentially decelerate the gas vortex formed in the cyclone so that the effect of the vortex remains good throughout the cyclone. The rest of the dust that can be separated is discharged via an opening disposed at the other end of the cyclone. Separation of the remaining dust takes place in an undisturbed flow condition in such a part of the vortex chamber where there are no openings on the periphery. By means of the design according to the invention, the separation efficiency of a horizontal cyclone is improved, which efficiency is, as known, lower than that of a conventional vertical cyclone, but there are economic advantages compared with a circulating fluidized bed reactor having a conventional vertical cyclone.

When most of the whirling mass is removed from the beginning of the horizontal cyclone, the rest of the cyclone will wear more slowly (the amount of the remaining whirling mass is smaller and the average grain size is smaller).

The invention will be described further, by way of example, with reference to the accompanying drawings in which

Fig. 1 shows a side view of one embodiment according to the invention,

Fig. 2 shows a section along the line A-A of Fig. 1,

Fig. 3 shows a section along the line B-B in Fig. 1,

Fig. 4 shows a side view of another embodiment according to the invention, and

Fig. 5 shows a section along the line C-C in Fig. 4.

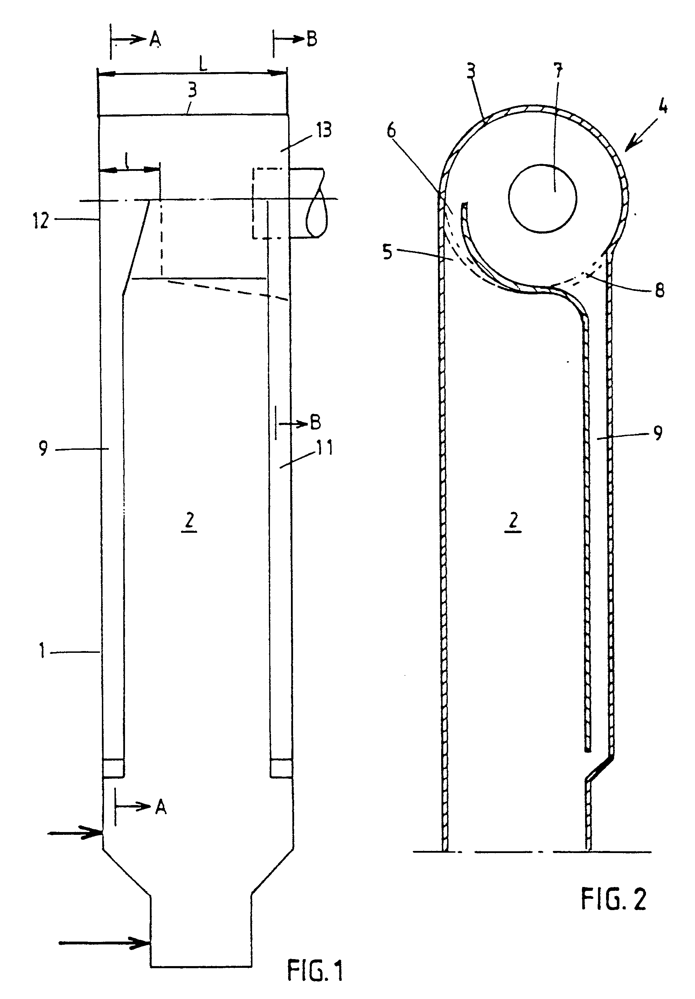

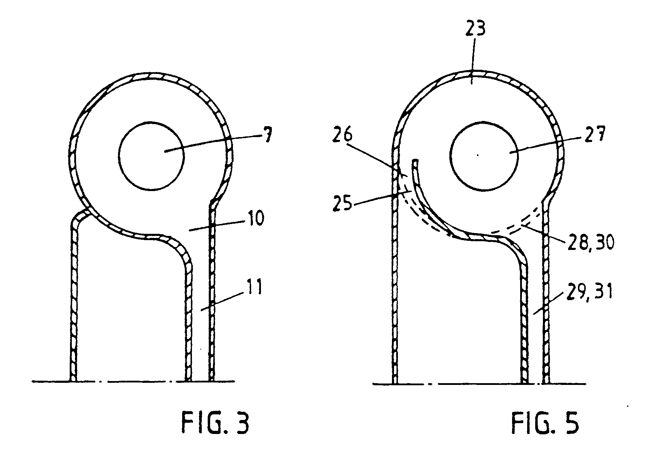

In Figures 1-3 is shown a circulating fluidized bed reactor 1, on top of a vertical reactor chamber 2 of which is disposed a cyclone separator 4 provided with a horizontal vortex chamber 3. Gases leaving the upper part of the reactor chamber are led to the vortex chamber by means of a tangentially connected duct 5 that is connected to a gas inlet opening 6 disposed on the periphery of the vortex chamber in the vicinity of one of its ends 12. The width 1 of the gas inlet opening 6 is smaller than the width L of the vortex chamber, the width of which is as large as that of the reactor chamber. A gas outlet opening is provided at the other end 13 of the vortex chamber, through which opening the purified gases are discharged. A first discharge opening 8 for separated solid material is provided near the gas inlet opening in the direction of the longitudinal axis, but on the opposite side of the vortex chamber. A first return duct 9 for solid material functioning as a discharge pipe is connected to the discharge opening 8. At the other end of the vortex chamber a second discharge opening 10 for separated solid material is disposed at a distance from the first discharge opening 8 in the direction of the longitudinal axis. A second return duct 11 is connected to this second discharge opening. The lower ends of both return ducts are connected to the lower part of the reactor chamber. Fluidizing gas, for example combustion air, is led in a way known per se to the lower part of the reactor.

Most of the solid material that is discharged with the flue gas from the upper part of the reactor chamber is separated at the gas inlet end of the vortex chamber and returned to the lower part of the reactor via the return duct 9. The rest of the solid material that can be separated is separated at the end near the gas discharge opening 7 and returned via the return duct 11. Purified gases are discharged from the vortex chamber via the opening 7, which can be connected to a heat recovery apparatus.

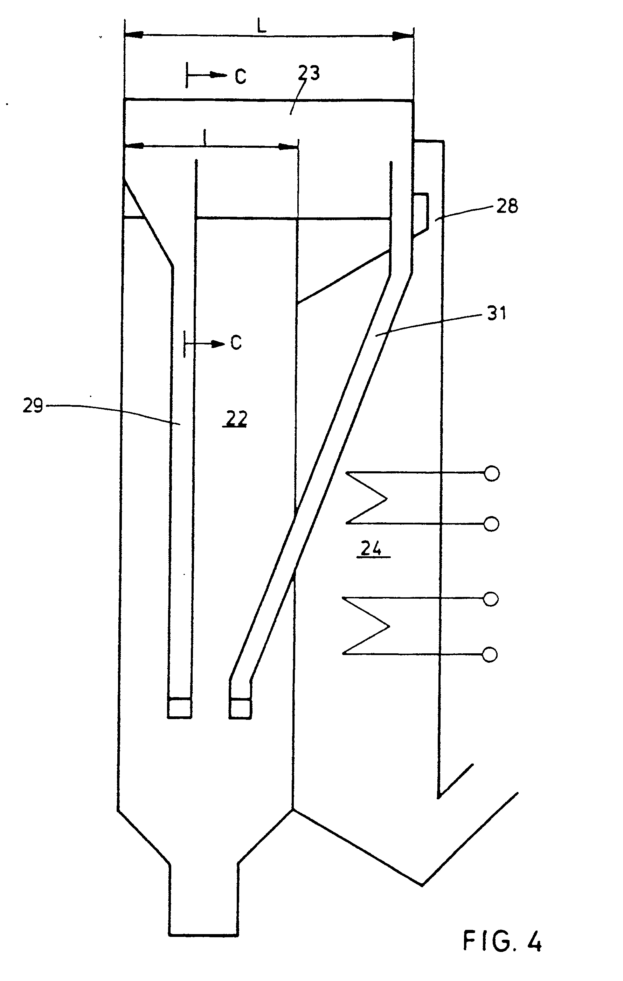

In the embodiment according to the invention shown in figures 4 and 5, the width L of the vortex chamber 23 of the separator said vortex chamber being disposed on top of the reactor chamber 22, is larger than the width of the reactor chamber. Consequently, the vortex chamber stretches partly over the convection part 24 located beside the reactor chamber. Due to the large width an effective separation of solid material from the flue gas is accomplished. The width 1 of the duct 25 leading to the vortex chamber and of the inlet opening 26 is as large as the width of the reactor chamber. The solid material separated on the periphery of the vortex chamber is returned to the lower part of the reactor chamber via return ducts 29 and 31, of which one is connected to an opening 28 near the gas inlet opening and the other to an opening near the gas outlet opening. The purified gas leaving through the gas discharge opening 27 is led via a duct 32 to the convection part.

The invention is not intended to be limited to the embodiments presented here as examples only but it can be modified and applied within the scope of the protection defined by the patent claims. For example, the vortex chamber can be conical in its longitudinal section or it can be formed by two cylindrical parts of different sizes connected by a conical part. The number of return ducts can be larger than two. The purified gas can be discharged from both ends of the vortex chamber.

## Claims

1. A circulating fluidized bed reactor having a vertical reactor chamber and a cyclone separator for separating particulate material from the flue gases from the reactor chamber, the horizontal vortex chamber (3, 23) of which is provided with openings on its periphery, a duct (5, 25) for leading gas from the reactor chamber and a return duct (9, 11 ; 29, 31) for leading separated solid material to the reactor chamber being respectively connected to the openings, and from which vortex chamber gas is discharged from one or both ends, **characterized** in that the gas inlet opening (6, 26) of the vortex chamber is arranged in the vicinity of one end thereof and has a width smaller than that of the vortex chamber, that a first discharge opening (8, 28) for separated solid material is provided near the gas inlet opening (6, 26) and that a second discharge opening (10, 30) is provided near the discharge opening (7, 27) for purified gas at a distance from the gas inlet opening in the longitudinal direction of the vortex chamber (3, 23).

2. A circulating fluidized bed reactor as claimed in claim 1, **characterized** in that one discharge opening (8) for separated material has been disposed at one end (12) of the vortex chamber and the other (10) at its other end (13).

3. A circulating fluidized bed reactor as claimed in claim 1 or 2, **characterized** in that the vortex chamber (3, 23) is disposed on top of the reactor chamber (2, 22).

4. A circulating fluidized bed reactor as claimed in claim 3, **characterized** in that the width (L) of the vortex chamber (3, 23) is greater than the width (1) of the reactor chamber (22).

5. A circulating fluidized bed reactor as claimed in claim 4, **characterized** in that the vortex chamber (23) reaches at least partly over a convection part (24) disposed beside the reactor chamber (22).

## Ansprüche

1. Zirkulierender Wirbelschichtreaktor mit einer vertikalen Reaktorkammer und einem Zyklonabscheider zur Abscheidung von Partikelmaterial aus den Raughgasen aus der Reaktorkammer, deren horizontale Wirbelkammer (3, 23) an ihrem Umfang mit Öffnungen versehen ist, einem Kanal (5, 25) zur Leitung von Gas aus der Reaktorkammer und einem Rückführkanal (9, 11 ; 29, 31) zur Leitung von abgeschiedenem Feststoff in die Reaktorkammer, die jeweils mit den Öffnungen verbunden sind, und aus welcher Wirbelkammer Gas aus einem oder den beiden Enden abgezogen wird, dadurch **gekennzeichnet,** daß die Gaseintrittsöffnung (6, 2 6) der Wirbelkammer in der Nähe von dessen einem Ende angeordnet ist und geringere Breite als die Wirbelkammer hat, daß eine erste Austrittsöffnung (8, 28) für abgeschiedenen Feststoff nah der Gasaustrittsöffnung (6, 26) vorgesehen ist und daß eine zweite Austrittsöffnung (10, 30) nah der Austrittsöffnung (7, 27) für gereinigtes Gas in einem Abstand zur Gaseintrittsöffnung in der Längsrichtung der Wirbelkammer (3, 23) vorgesehen ist.

2. Zirkulierender Wirbelschichtreaktor gemäß Anspruch 1, dadurch **gekennzeichnet,** daß eine Austrittsöffnung (8) für abgeschiedenen Feststoff an einem Ende (12) der Wirbelkammer und die andere (10) an ihrem anderen Ende (13) angeordnet ist.

3. Zirkulierender Wirbelschichtreaktor gemäß Anspruch 1 oder 2, dadurch **gekennzeichnet,** daß die Wirbelkammer (3, 23) oberhalb der Reaktorkammer (2, 22) angeordnet ist.

4. Zirkulierender Wirbelschichtreaktor gemäß Anspruch 3, dadurch **gekennzeichnet,** daß die Breite (L) der Wirbelkammer (3, 23) größer ist als die Breite (1) der Reaktorkammer (22).

5. Zirkulierender Wirbelschichtreaktor gemäß Anspruch 4, dadurch **gekennzeichnet,** daß sich die Wirbelkammer (23) mindestens zum Teil über einen Konvektionsteil (24) erstreckt, der neben der Reaktorkammer (22) angeordnet ist.

## Revendications

1. Réacteur à lit fluidisé à circulation avant une chambre de réacteur verticale et un séparateur à cyclone pour séparer des particules de matière des gaz de fumée à partir de la chambre de réacteur, dont la chambre à tourbillons horizontale (3, 23) est munie d'ouvertures sur sa périphérie, un conduit (5, 25) pour conduire le gaz à partir de la chambre de réacteur et un conduit de retour (9, 11, 29, 31) pour diriger la matière solide separée vers la chambre de réacteur étant connectés respectivement aux ouvertures, et à partir de laquelle chambre à tourbillons le gaz est évacué à partir de l'une ou des deux extrémités, caractérisé en ce que l'orifice d'admission de gaz (6, 26) de la chambre à tourbillons est disposé dans le voisinage d'une extrémité de celle-ci et a une largeur plus petite que celle de la chambre à tourbillons, en ce qu'une première ouverture d'évacuation (9, 29) pour la matière solide séparée est prévue près de l'orifice d'admission de gaz (6, 26) et en ce qu'une seconde ouverture d'évacuation (10, 30) est prévue près de l'ouverture d'évacuation (7, 27) pour le gaz purifié à une distance de l'orifice d'admission de gaz dans la direction longitudinale de la chambre à tourbillons (3, 23).

2. Réacteur à lit fluidisé à circulation selon la revendication 1, caractérisé en ce que une ouverture d'évacuation (9) pour la matière séparée a été disposée à une extrémité (12) de la chambre à tourbillons et l'autre (10) à son autre extrémité (13).

3. Réacteur à lit fluidisé à circulation selon la revendication 1 ou 2, caractérisé en ce que la chambre à tourbillons (3, 23) est disposée au sommet de la chambre de réacteur (2, 22).

4. Réacteur à lit fluidisé à circulation selon la revendication 3, caractérisé en ce que la largeur (L) de la chambre à tourbillons (3, 23) est plus grande que la largeur (1) de la chambre de réacteur (22).

5. Réacteur à lit fluidisé à circulation selon la revendication 4, caractérisé en ce que la chambre à tourbillons (23) s'étend au moins partiellement sur une partie de convection (24) disposée à côté de la chambre de réacteur (22).

FIG.1

FIG. 2

FIG. 3

FIG. 5

FIG. 4